# EUROPEAN PATENT APPLICATION

(11) **EP 4 836 499 A1**
(43) Date of publication of application: **04.11.2026**
(21) Application number: 23962821.7
(22) Date of filing: 29.12.2023
(51) Int. Cl.: H04W 24/06

(54) **PERFORMANCE MONITORING CONFIGURATION METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); SUN, Gang, Beijing 100022 (CN); JIN, Liqiang, Beijing 100022 (CN); ZHANG, Qun, Beijing 100022 (CN)
(74) Representative: Haseltine Lake Kempner LLP
(86) International application number: PCT/CN2023/143370
(87) International publication number: WO 2025/138147

(57) **Abstract**

The embodiments of the present application provide a performance monitoring configuration method and apparatus. The performance monitoring configuration method includes: a terminal equipment receives configuration information from a network device, wherein the configuration information is used for beam management based on an AI/ML functionality/model, and performance monitoring of the AI/ML functionality/model.

## Description

### TECHNICAL FIELD

Embodiments of the present application relate to the field of communications technologies.

### BACKGROUND

In NR Rel-18, artificial intelligence or machine learning (AI/ML) for an air interface has been studied. AI/ML may be used for the following use cases: Channel State Information (CSI) feedback enhancement, beam management, and positioning enhancement. The CSI feedback enhancement may include CSI prediction and CSI compression; the beam management may include spatial beam prediction and temporal beam prediction; and the positioning enhancement may include direct positioning and AI/ML assisted positioning.

In some sub use cases, a bilateral model may be used, where an AI/ML model operates on both a terminal equipment side and a network device side. In some other sub use cases, a unilateral model may be used, where the AI/ML model operates on either a terminal equipment side or a network device side. For beam management, the AI/ML model may operate on the terminal equipment side and/or the network device side.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that a terminal equipment and/or a network device are/is able to predict beams by utilizing an AI/ML functionality/model and based on a beam measurement result, but there is currently no clear solution for performance monitoring of the AI/ML functionality/model.

To address at least one of the above problems, embodiments of the present application provide a performance monitoring configuration method and apparatus.

According to an aspect of embodiments of the present application, there is provided with a performance monitoring configuration method, including:
receiving, by a terminal equipment, configuration information from a network device,
wherein the configuration information is used for beam management based on an AI/ML functionality/model, and performance monitoring of the AI/ML functionality/model.

According to another aspect of the embodiments of the present application, there is provided with a performance monitoring configuration apparatus, including:
a receiving unit configured to receive configuration information from a network device,
wherein the configuration information is used for beam management based on an AI/ML functionality/model, and performance monitoring of the AI/ML functionality/model.

According to another aspect of the embodiments of the present application, there is provided with a performance monitoring configuration method, including:
transmitting, by a network device, configuration information to a terminal equipment,
wherein the configuration information is used for beam management based on an AI/ML functionality/model, and performance monitoring of the AI/ML functionality/model.

According to another aspect of the embodiments of the present application, there is provided with a performance monitoring configuration apparatus, including:
a transmitting unit configured to transmit configuration information to a terminal equipment,
wherein the configuration information is used for beam management based on an AI/ML functionality/model, and performance monitoring of the AI/ML functionality/model.

According to another aspect of the embodiments of the present application, there is provided with a communication system, including:
a network device configured to transmit configuration information to a terminal equipment;
the terminal equipment configured to receive the configuration information, wherein the configuration information is used for beam management based on an AI/ML functionality/model, and performance monitoring of the AI/ML functionality/model.

One of the beneficial effects of the embodiments of the present application is that a terminal equipment receives configuration information from a network device, the configuration information is used for beam management based on an AI/ML functionality/model and performance monitoring of the AI/ML functionality/model, thereby being able to improve performance and efficiency of beam management and enhance accuracy and reliability of beam management.

With reference to the specification and drawings below, a specific embodiment of the present application is disclosed in detail, which specifies the manner in which the principle of the present application may be adopted. It should be understood that, the scope of the embodiments of the present application is not limited. Within the scope of the spirit and clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a performance monitoring configuration method in the embodiments of the present application;
FIG. 3 is a schematic diagram of a beam management method in the embodiments of the present application;
FIG. 4 is another schematic diagram of a performance monitoring configuration method in the embodiments of the present application;
FIG. 5 is a schematic diagram of a performance monitoring configuration apparatus in the embodiments of the present application;
FIG. 6 is another schematic diagram of a performance monitoring configuration apparatus in the embodiments of the present application;
FIG. 7 is a schematic diagram of a terminal equipment in the embodiments of the present application; and
FIG. 8 is a schematic diagram of a network device in the embodiment of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In the embodiments of this disclosure, the term "user equipment (UE)" or "terminal equipment (TE)" refers to, for example, an equipment accessing to a communication network and receiving network services via a network device, and may also be referred to as. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

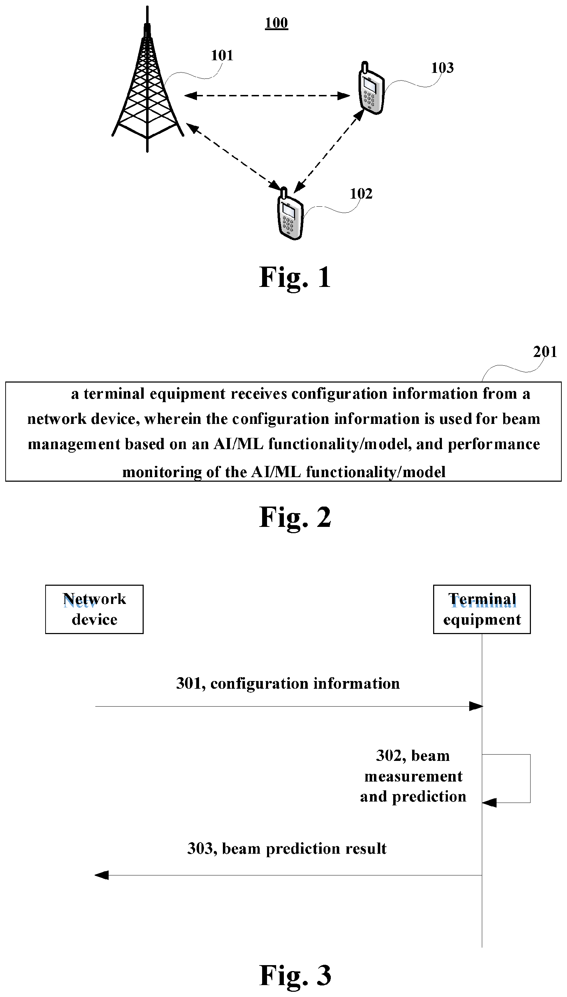

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In the embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network device 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In the embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling can also be Medium Access Control (MAC) signaling; or is also called MAC control element (MAC CE). However, the present application is not limited to this.

The performance of an AI/ML functionality/model for beam management needs to be monitored, so that corresponding control of the AI/ML functionality/model may be performed, such as activation/deactivation/selection/switching/fallback.

For example, network-side monitoring may be performed. The network side monitors performance metrics, and makes decisions on activation/deactivation/selection/switching/ fallback.

For another example, UE-side monitoring may be performed. The terminal side monitors performance metrics, and makes decisions on activation/deactivation/selection/switching/ fallback.

For yet another example, hybrid monitoring may be performed. The terminal side monitors performance metrics, and the network side makes decisions on activation/deactivation/ selection/switching/fallback.

In the embodiments of the present application, one or more AI/ML models may be configured and run in a network device and/or a terminal equipment. The AI/ML models may be used in various signal processing functions of wireless communication, such as CSI prediction, CSI compression, beam prediction and positioning management, etc. The present application is not limited to this.

### Embodiments of a First Aspect

The embodiments of the present application provide a performance monitoring configuration method, which is illustrated from a terminal equipment side.

FIG. 2 is a schematic diagram of a performance monitoring configuration method in the embodiments of the present application, as shown in FIG. 2, the method including:
201: a terminal equipment receives configuration information from a network device,
wherein the configuration information is used for beam management based on an AI/ML functionality/model, and performance monitoring of the AI/ML functionality/model.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In some embodiments, functionality refers to an AI/ML feature/feature group enabled by a configuration, wherein the configuration is supported based on a condition indicated by a UE capability.

For example, an AL/ML functionality may be one or more functionalities, or one or more logic models, or one or more sub functionalities, or one or more features, or one or more feature groups.

For another example, the functionality may refer to using AI/ML for spatial beam prediction, or using AI/ML for temporal beam prediction, or using AI/ML for CSI prediction, or using AI/ML for direct positioning, or using AI/ML assisted positioning, etc.

In some embodiments, configuration information for beam management may include configuration information for one or more reference signals used for beam management or beam measurement, such as CSI-RS configuration information, etc. The present application is not limited to this, and specific configuration information may also be seen by referring to the related art.

In some embodiments, one or more reference signals are used for measurement, and measurement results are input into the AI/ML functionality/model; another one or more reference signals are used for the output of the AI/ML functionality/model to perform inference.

FIG. 3 is another schematic diagram of a beam management method in the embodiments of the present application, which is described by taking a terminal equipment configured with AI/ML as an example. As shown in FIG. 3, the method includes:
301: a terminal equipment receives configuration information from a network device; for example, the configuration information includes a second reference signal resource set (Set B) for beam measurement and a first reference signal resource set (Set A) for beam prediction;
302: the terminal equipment performs beam measurement and inputs a result of the beam measurement into an AI/ML functionality/model; for example, the measurement result of a reference signal in the Set B is taken as an input of AI/ML, and a reference signal in the Set A is used for prediction (or referred to as inference); and
303: the terminal equipment transmits a beam prediction result to the network device.

For example, an AI/ML functionality is at a terminal equipment side. After enabling or activating the AI/ML functionality, the terminal equipment performs beam measurement based on a reference signal from a network side, performs beam prediction by using AI/ML based on a beam measurement result, and transmits a prediction result to the network device.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

The beam management based on AI/ML has been explained schematically hereinbefore, and performance monitoring will be explained hereinafter.

In some embodiments, for network side performance monitoring, a second reference signal set (Set B) for measurement is configured, and one or more reference signals for performance monitoring are configured,
wherein the reference signals for performance monitoring are the same or at least partially the same as reference signals in a first reference signal set (Set A) for inference, or the reference signals for performance monitoring are a subset of the first reference signal set (Set A) for inference.

For example, for network-side (gNB-side) performance monitoring (i.e., the AI/ML functionality/model for beam management is located at the network/gNB side), in addition to the reference signals (Set B) for measurement, separate reference signals may be configured for performance monitoring.

For example, the reference signals for performance monitoring may be all the same as the reference signals for inference (i.e., the RSs in Set A), or the reference signals for performance monitoring may be partially the same as the reference signals for inference (i.e., the RSs in Set A), or the reference signals for performance monitoring may be a subset of Set A.

In some embodiments, for network side performance monitoring, a report for measurement is configured, and a report for performance monitoring is configured.

For example, for network-side (gNB-side) performance monitoring, in addition to a measurement report (a report for Set B), a separate report may be configured for the RSs for performance monitoring. The report quantity for this report may reuse the existing report quantity, or may adopt a newly introduced report quantity.

In some embodiments, for network side performance monitoring, the reference signals for measurement and the reference signals for performance monitoring are configured together, and measurement results for the reference signals for measurement and measurement results for the reference signals for performance monitoring are reported together.

For example, for network-side (gNB-side) performance monitoring, the RS for performance monitoring and the RS for measurement may be configured together, i.e., via the same reporting configuration. The measurement results of Set B and the measurement results of the performance monitoring RS may be provided to the network device in the same report.

In some embodiments, for network side performance monitoring, the number of the reference signals in the second reference signal set (Set B) for measurement is M, measurement results for M reference signals are reported, or measurement results for N reference signals are reported, where N is less than or equal to M.

For example, for network-side (gNB-side) performance monitoring (i.e., the AI/ML functionality/model for beam management is located at the network/gNB side), if the number of reference signals (Set B) for measurement is M, the measurement results of all of M reference signals in Set B shall be reported.

For another example, for network-side (gNB-side) performance monitoring (i.e., the AI/ML functionality/model for beam management is located at the network/gNB side), if the number of reference signals (Set B) for measurement is M, a subset of the reference signals in Set B shall be reported, for example, the measurement results of N reference signals are reported, where N ≤ M.

In some embodiments, the minimum number of the reference signals whose measurement results are reported in the second reference signal set (Set B) is predefined or configured, and/or, the maximum number of the reference signals whose measurement results are reported in the second reference signal set (Set B) is predefined or configured.

For example, the minimum number of RSs whose measurement results are reported in Set B, such as X1, may be predefined or configured (in one example, X1 may be greater than 4). Alternatively, the maximum number of RSs whose measurement results are reported in Set B, such as X2, may be predefined or configured (in one example, X2 may be greater than 4).

In some embodiments, for network side performance monitoring, the number of the reference signals for performance monitoring is K, measurement results for K reference signals are reported, or measurement results for L reference signals are reported, where L is less than or equal to K.

For example, for network-side (gNB-side) performance monitoring (i.e., the AI/ML functionality/model for beam management is located at the network/gNB side), if the number of reference signals for performance monitoring is K, the measurement results of all of K reference signals for performance monitoring shall be reported.

For another example, for network-side (gNB-side) performance monitoring (i.e., the AI/ML functionality/model for beam management is located at the network/gNB side), if the number of reference signals for performance monitoring is K, a subset of the reference signals for performance monitoring is reported, for example, the measurement results of L reference signals are reported, where L ≤ K.

In some embodiments, the minimum number of the reference signals for performance monitoring whose measurement results are reported is predefined or configured, and/or, the maximum number of the reference signals for performance monitoring whose measurement results are reported is predefined or configured.

For example, the minimum number of RSs whose measurement results are reported among the reference signals for performance monitoring, such as Y1, may be predefined or configured (in one example, Y1 may be greater than 4). Alternatively, the maximum number of RSs whose measurement results are reported among the reference signals for performance monitoring, such as Y2, may be predefined or configured (in one example, Y2 may be greater than 4).

Some cases of network side monitoring have been exemplarily illustrated hereinbefore, and performance monitoring metrics will be explained hereinafter.

In some embodiments, for network side performance monitoring, the strongest one or more beams are reported by the terminal equipment; the network device calculates a performance metric, namely beam prediction accuracy, based on the strongest one or more beams, wherein a first report quantity is introduced, or a report quantity of L1-RSRP/L1-SINR is reused.

For example, for NW-side monitoring, the UE may report the Top K/Top-1 beam, such as CSI-RS Resource Indicator (CRI). A new report quantity may be introduced, namely a CRIonly report (for example, an RRC parameter reportQuantity is set to be "criOnly"). The UCI format is also enhanced to report CRI only. Only CRI (K CRIs or one CRI) is reported in the report. The network side, namely the gNB side, shall calculate a performance metric (beam prediction accuracy). In another example, existing report quantities of L1-RSRP/L1-SINR may be reused.

In some embodiments, for network side performance monitoring, hypothetical BLER is used for a performance metric, a second report quantity is introduced; the hypothetical BLER is included in the report for performance monitoring.

For example, for NW-side monitoring, a new report quantity may be introduced if the hypothetical BLER is adopted as the performance metric. Hypothetical BLER may be reported in a monitoring report. For example, an RRC parameter reportQuantity is set to be "BLER", and the UCI format may also be enhanced to report the hypothetical BLER.

In some embodiments, for network side performance monitoring, the terminal equipment reports L1-RSRP/L1-SINR of the strongest one or more or all beams for performance monitoring, wherein the report quantity of L1-RSRP/L1-SINR is reused.

For example, for NW-side monitoring, the UE may report the L1-RSRP/L1-SINR of the top K beams/Top-1 beam/all beams of configured reference signals for monitoring. Existing report quantities of L1-RSRP/L1-SINR may be reused.

In some embodiments, the network device calculates a performance metric based on the L1-RSRP/L1-SINR of the strongest one or more or all beams, i.e., difference between the L1-RSRP/L1-SINR for monitoring and the L1-RSRP/L1-SINR for prediction.

For example, the network side may calculate the performance metric, namely the difference between the L1-RSRP/L1-SINR measured for performance monitoring and the L1-RSRP/L1-SINR measured for beam prediction.

In some embodiments, a plurality of reports are configured, in which one report is for the measurement results for one or more reference signals for measurement, and another report is for the measurement results for one or more reference signals for performance monitoring.

In some embodiments, one report is configured, which is for the measurement results for one or more reference signals for measurement and for the measurement results for one or more reference signals for performance monitoring.

For example, a plurality of reports may be configured, such as two reports for L1-RSRP/L1-SINR. One report is used for the measurement results of Set B, and another report is used for the measurement results of performance monitoring. Alternatively, the same one report may be used to carry L1-RSRP/L1-SINR for both the measurement results of Set B and the measurement results of performance monitoring.

In some embodiments, for hybrid performance monitoring, one or more reference signals for performance monitoring are configured, wherein the reference signals for performance monitoring are the same or at least partially the same as reference signals in a first reference signal set (Set A) for inference, or the reference signals for performance monitoring are a subset of the first reference signal set (Set A) for inference.

For example, for hybrid monitoring (i.e., the AI/ML functionality/model is on the UE side, the UE reports measurements/performance metrics to the gNB side, and the gNB side makes decisions), the reference signals for performance monitoring may be all the same as the reference signals in Set A (reference signals for inference), or the reference signals for performance monitoring may be partially the same as the reference signals in Set A (reference signals for inference), or the reference signals for performance monitoring may be a subset of Set A.

In some embodiments, the terminal equipment calculates a performance metric (i.e., beam prediction accuracy) based on the strongest one or more beams and includes them in the report for performance monitoring, wherein a first report quantity is introduced, or a report quantity of L1-RSRP/L1-SINR is reused.

For example, the UE may calculate the prediction accuracy of Top-K/Top-1 beams and report the prediction accuracy. In the report for performance monitoring, the UE may report the prediction accuracy. For example, a new report quantity may be introduced (e.g., the RRC parameter reportQuantity is set to be 'criOnly'), and the UCI format is also enhanced to report CRI only.

In some embodiments, the strongest one or more beams are included in the report for performance monitoring by the terminal equipment; the network device calculates a performance metric (i.e., beam prediction accuracy) based on the strongest one or more beams, wherein a first report quantity is introduced, or a report quantity of L1-RSRP/L1-SINR is reused.

In some embodiments, the strongest one or more beams based on inference are included in a report for inference by the terminal equipment; the network device calculates beam prediction accuracy based on the strongest one or more beams.

For example, in the report for performance monitoring, the UE may report the Top-K/Top-1 CRIs, i.e., report the CRIs only. In the report for inference, the UE reports the Top-K/Top-1 CRIs based on inference. Alternatively, the Top-K/Top-1 CRIs for performance monitoring and the Top-K/Top-1 CRIs for inference may be transmitted in the same report. The network side calculates the beam prediction accuracy. For example, a new report quantity of CRI only may be introduced, or existing report quantities of L1-RSRP/L1-SINR may be reused.

In some embodiments, L1-RSRP/L1-SINR is used for a performance metric, the terminal equipment reports the L1-RSRP/L1-SINR for performance monitoring and the L1-RSRP/L1-SINR for inference, the network device calculates a difference between the L1-RSRP/L1-SINR for performance monitoring and the L1-RSRP/L1-SINR for inference.

For example, if L1-RSRP/L1-SINR is used as the performance metric, the UE reports the L1-RSRP/L1-SINR for monitoring measurement, and may also report the L1-RSRP/L1-SINR for inference. The network side may calculate a difference between the L1-RSRP/L1-SINR for monitoring measurement and the L1-RSRP/L1-SINR for prediction.

In some embodiments, a L1-RSRP/L1-SINR difference is used for a performance metric, the terminal equipment calculates the difference between the L1-RSRP/L1-SINR for performance monitoring and the L1-RSRP/L1-SINR for inference, and reports the difference.

For example, the UE calculates a difference between the L1-RSRP/L1-SINR for monitoring measurement and the L1-RSRP/L1-SINR for prediction. The UE reports the L1-RSRP/L1-SINR difference. For example, a new report quantity may be introduced. For example, an RRC parameter reportQuantity is set to be "RSRPDifference", and a UCI format may also be enhanced to report the L1-RSRP/L1-SINR difference.

In some embodiments, hypothetical BLER is used for a performance metric, the terminal equipment reports the hypothetical BLER for performance monitoring and/or the hypothetical BLER for inference.

For example, if the hypothetical BLER is used as a performance metric, the UE reports the hypothetical BLER for monitoring measurement and/or the hypothetical BLER for predicting beams. A new report quantity may be introduced. For example, an RRC parameter reportQuantity is set to be "BLER", and a UCI format may also be enhanced to report the hypothetical BLER.

The performance monitoring with Discontinuous Reception (DRX)/Discontinuous Transmission (DTX) is further described below.

In some embodiments, when DRX/DTX is enabled, a timer or a counter is enlarged or scaled for performance monitoring of an AI/ML functionality/model.

For example, when DRX/DTX is enabled, such as DRX being enabled at the UE and/or DTX being enabled at the gNB, the timer/counter is enlarged/scaled for performance monitoring of the AI/ML functionality/model. For example, for a non-DRX case, an evaluation window length is *T_{nonDRX}*. When DRX is enabled, the evaluation window length may be *s* × *T_{nonDRX}*, where s denotes a scaling factor, and s may be predefined or configured.

In some embodiments, when DRX/DTX is enabled, performance monitoring for an AI/ML functionality/model is paused or stopped during a DRX/DTX period.

In some embodiments, when DRX/DTX is enabled, performance monitoring for an AI/ML functionality/model is maintained during a DRX/DTX period.

For example, when DRX/DTX is enabled, the performance monitoring for the AI/ML functionality/model is paused/stopped during the DRX/DTX period. For example, when DRX/DTX is enabled, the performance monitoring for the AI/ML functionality/model is maintained during the DRX/DTX period.

In some embodiments, DRX/DTX is enabled, a time window for temporal beam prediction falls within or overlaps with a DRX/DTX period, and prediction results for a part or all of time instances are skipped.

In some embodiments, DRX/DTX is enabled, a time window for temporal beam prediction falls within or overlaps with a DRX/DTX period, and prediction results for a part or all of time instances are reported.

For example, for BM case-1 (temporal beam prediction), if the prediction window falls within the DRX/DTX period or overlaps with the DRX/DTX period, the prediction results of some (or all) time instances may be skipped. For another example, for BM case-1 (temporal beam prediction), if the prediction window falls within the DRX/DTX period or overlaps with the DRX/DTX period, the prediction results of all of time instances are still be reported.

In some embodiments, AI/ML related configuration is changed or updated or switched, and the performance monitoring of the AI/ML functionality/model is reset or restarted, wherein the AI/ML related configuration change or update or switching includes at least one of the following: AI/ML functionality/model change or update, AI/ML functionality/model switching, change in configuration of reference signals for performance monitoring, cell configuration change, scene configuration change, prediction time instance number change, or BWP switching.

For example, the performance monitoring of AI/ML for beam management is reset/restarted (e.g., a timer/counter is reset/restarted) when the following situations occur:
- configuration related to AI/ML is changed, such as
   -- change/update of an AI/ML functionality/model or switching of the AI/ML functionality/model occurs;
   -- configuration of one or more reference signals for performance monitoring is changed;
   -- cell/scenario-specific configuration/additional condition is changed; for example, the UE moves into a cell with different configurations, or the number of predicted time instances changes due to variation in a UE speed.
- The BWP is switched to a target BWP with different AI/ML configurations.

The embodiments of the present application may be applied to a UE-side model and/or a gNB-side model. In addition, the embodiments of the present application may be applied to BM case 1 (spatial beam prediction) and/or BM case 2 (temporal beam prediction).

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that a terminal equipment receives configuration information from a network device, the configuration information is used for beam management based on an AI/ML functionality/model and performance monitoring of the AI/ML functionality/model, thereby being able to improve the performance and efficiency of beam management and enhance the accuracy and reliability of beam management.

### Embodiments of a Second Aspect

The embodiments of the present application provide a performance monitoring configuration method, which is illustrated from a network device side. The embodiments of the second aspect may be combined with the embodiments of the first aspect, and the same content as the embodiments of the first aspect will not be repeated.

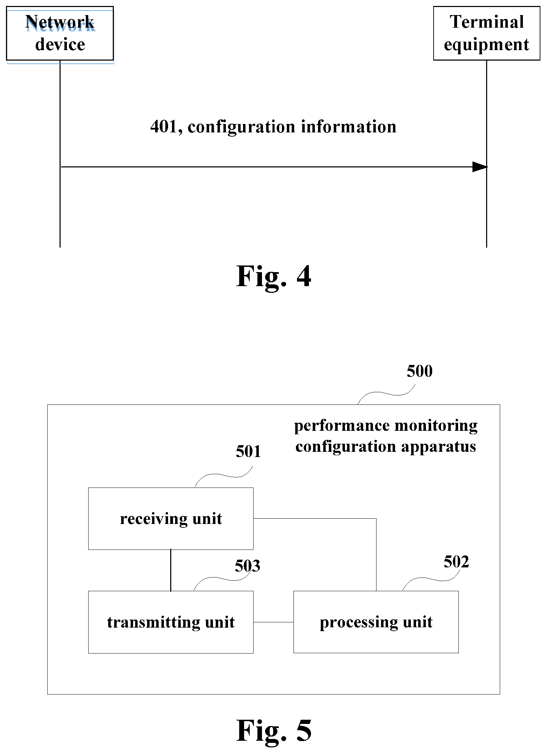

FIG. 4 is another schematic diagram of a performance monitoring configuration method in the embodiments of the present application, as shown in FIG. 4, the method including:
401: a network device transmits configuration information to a terminal equipment,
wherein the configuration information is used for beam management based on an AI/ML functionality/model, and performance monitoring of the AI/ML functionality/model.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that a terminal equipment receives configuration information from a network device, the configuration information is used for beam management based on an AI/ML functionality/model and performance monitoring of the AI/ML functionality/model, thereby being able to improve the performance and efficiency of beam management and enhance the accuracy and reliability of beam management.

### Embodiments of a Third Aspect

The embodiments of the present application provide a performance monitoring configuration apparatus. The apparatus may be, for example, a terminal equipment, or one or more parts or components configured in the terminal equipment, and the same content as the embodiment of the first and second aspects will not be repeated.

FIG. 5 is a schematic diagram of a performance monitoring configuration apparatus in the embodiments of the present application, as shown in FIG. 5, a performance monitoring configuration apparatus 500 in the embodiments of the present application including:
a receiving unit 501 configured to receive configuration information from a network device; the configuration information is used for beam management based on an AI/ML functionality/model, and performance monitoring of the AI/ML functionality/model.

In some embodiments, for network side performance monitoring, a second reference signal set (Set B) for measurement is configured, and one or more reference signals for performance monitoring are configured.

In some embodiments, the reference signals for performance monitoring are the same or at least partially the same as reference signals in a first reference signal set (Set A) for inference.

In some embodiments, the reference signals for performance monitoring are a subset of the first reference signal set (Set A) for inference.

In some embodiments, for network side performance monitoring, a report for measurement is configured, and a report for performance monitoring is configured.

In some embodiments, for network side performance monitoring, the reference signals for measurement and the reference signals for performance monitoring are configured together, and measurement results for the reference signals for measurement and measurement results for the reference signals for performance monitoring are reported together.

In some embodiments, for network side performance monitoring, the number of the reference signals in the second reference signal set (Set B) for measurement is M, measurement results for M reference signals are reported. In some embodiments, measurement results for N reference signals are reported, where N is less than or equal to M.

In some embodiments, the minimum number of the reference signals whose measurement results are reported in the second reference signal set (Set B) is predefined or configured, and/or, the maximum number of the reference signals whose measurement results are reported in the second reference signal set (Set B) is predefined or configured.

In some embodiments, for network side performance monitoring, the number of the reference signals for performance monitoring is K, measurement results for K reference signals are reported. In some embodiments, measurement results for L reference signals are reported, where L is less than or equal to K.

In some embodiments, the minimum number of the reference signals for performance monitoring whose measurement results are reported is predefined or configured, and/or, the maximum number of the reference signals for performance monitoring whose measurement results are reported is predefined or configured.

In some embodiments, for network side performance monitoring, the strongest one or more beams are reported by a terminal equipment; the network device calculates a performance metric, namely beam prediction accuracy, based on the strongest one or more beams.

In some embodiments, a first report quantity is introduced, or a report quantity of L1-RSRP/L1-SINR is reused.

In some embodiments, for network side performance monitoring, hypothetical BLER is used for a performance metric, a second report quantity is introduced; the hypothetical BLER is included in a report for performance monitoring.

In some embodiments, for network side performance monitoring, the terminal equipment reports L1-RSRP/L1-SINR of the strongest one or more or all beams for performance monitoring, wherein the report quantity of L1-RSRP/L1-SINR is reused.

In some embodiments, the network device calculates a performance metric based on the L1-RSRP/L1-SINR of the strongest one or more or all beams, i.e., a difference between the L1-RSRP/L1-SINR for monitoring and the L1-RSRP/L1-SINR for prediction.

In some embodiments, a plurality of reports are configured, in which one report is for the measurement results for the reference signals for measurement, and another report is for the measurement results for the reference signals for performance monitoring.

In some embodiments, one report is configured, which is for the measurement results for the reference signals for measurement and for the measurement results for the reference signals for performance monitoring.

In some embodiments, for hybrid performance monitoring, one or more reference signals for performance monitoring are configured.

In some embodiments, the reference signals for performance monitoring are the same or at least partially the same as reference signals in a first reference signal set (Set A) for inference.

In some embodiments, the reference signals for performance monitoring are a subset of the first reference signal set (Set A) for inference.

In some embodiments, the terminal equipment calculates a performance metric (i.e., beam prediction accuracy) based on the strongest one or more beams and includes them in the report for performance monitoring, wherein a first report quantity is introduced, or a report quantity of L1-RSRP/L1-SINR is reused.

In some embodiments, the strongest one or more beams are included in the report for performance monitoring by the terminal equipment; the network device calculates a performance metric (i.e., beam prediction accuracy) based on the strongest one or more beams, wherein a first report quantity is introduced, or a report quantity of L1-RSRP/L1-SINR is reused.

In some embodiments, one or more top beams based on inference are included in a report for inference by the terminal equipment; the network device calculates beam prediction accuracy based on the one or more top beams.

In some embodiments, L1-RSRP/L1-SINR is used for a performance metric, the terminal equipment reports the L1-RSRP/L1-SINR for performance monitoring and the L1-RSRP/L1-SINR for inference, the network device calculates a difference between the L1-RSRP/L1-SINR for performance monitoring and the L1-RSRP/L1-SINR for inference.

In some embodiments, a L1-RSRP/L1-SINR difference is used for a performance metric, the terminal equipment calculates the difference between the L1-RSRP/L1-SINR for performance monitoring and the L1-RSRP/L1-SINR for inference, and reports the difference.

In some embodiments, hypothetical BLER is used for a performance metric, the terminal equipment reports the hypothetical BLER for performance monitoring and/or the hypothetical BLER for inference.

In some embodiments, when DRX/DTX is enabled, a timer or a counter is enlarged or scaled for performance monitoring of an AI/ML functionality/model.

In some embodiments, when DRX/DTX is enabled, performance monitoring for an AI/ML functionality/model is paused or stopped during a DRX/DTX period. In some embodiments, performance monitoring for an AI/ML functionality/model is maintained during the DRX/DTX period.

In some embodiments, DRX/DTX is enabled, a time window for temporal beam prediction falls within or overlaps with a DRX/DTX period, and prediction results for a part or all of time instances are skipped. In some embodiments, prediction results for a part or all of time instances are reported.

In some embodiments, AI/ML related configuration is changed or updated or switched, and the performance monitoring of the AI/ML functionality/model is reset or restarted.

In some embodiments, the AI/ML related configuration change or update or switching includes at least one of the following: AI/ML functionality/model change or update, AI/ML functionality/model switching, change in configuration of reference signals for performance monitoring, cell configuration change, scene configuration change, prediction time instance number change, or BWP switching.

In some embodiments, as shown in FIG. 5, the performance monitoring configuration apparatus 500 may further include:
a processing unit 502 configured to perform beam measurement and/or beam prediction; and
a transmitting unit 503 configured to transmit beam measurement information and/or beam prediction information to the network device.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinbefore, but the present application is not limited to this. The performance monitoring configuration apparatus 500 may further include other components or modules, and the details of these components or modules can be seen by referring to the related art.

In addition, for the sake of simplicity, FIG. 5 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

It can be seen from the above embodiments that a terminal equipment receives configuration information from a network device, the configuration information is used for beam management based on an AI/ML functionality/model and performance monitoring of the AI/ML functionality/model, thereby being able to improve the performance and efficiency of beam management and enhance the accuracy and reliability of beam management.

### Embodiments of a Fourth Aspect

The embodiments of the present application provide a performance monitoring configuration apparatus. The apparatus may be, for example, a network device, or one or more parts or components configured in the network device, and the same content as the embodiment of the first to third aspects will not be repeated.

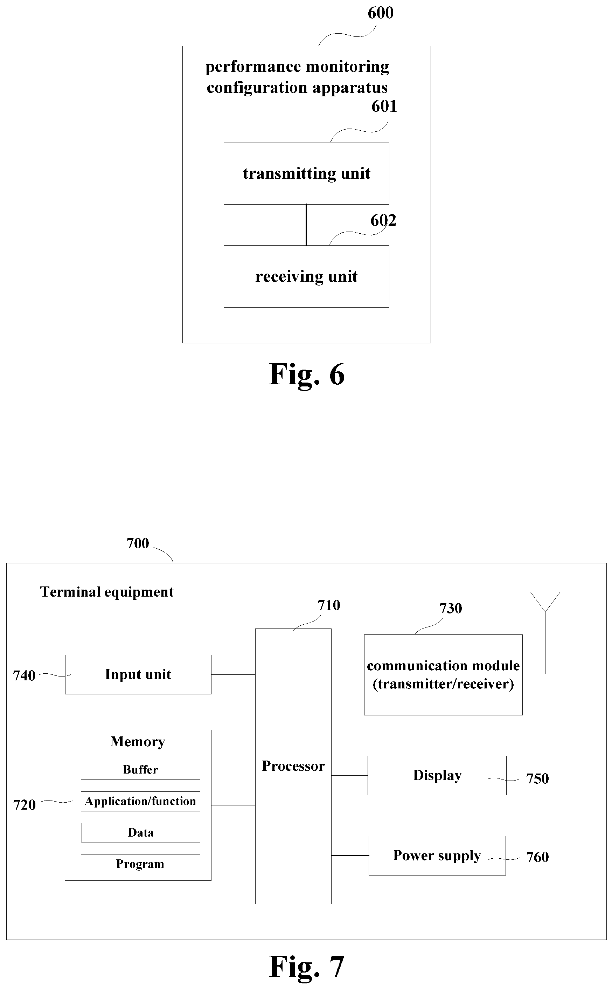

FIG. 6 is another schematic diagram of a performance monitoring configuration apparatus in the embodiments of the present application, as shown in FIG. 6, a performance monitoring configuration apparatus 600 including:
a transmitting unit 601 configured to transmit configuration information to a terminal equipment, wherein the configuration information is used for beam management based on an AI/ML functionality/model, and performance monitoring of the AI/ML functionality/model.

In some embodiments, as shown in FIG. 6, the performance monitoring configuration apparatus 600 may further include:
a receiving unit 602 configured to receive beam measurement information and/or beam prediction information transmitted by the terminal equipment.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinbefore, but the present application is not limited to this. The performance monitoring configuration apparatus 600 may further include other components or modules, and the details of these components or modules can be seen by referring to the related art.

In addition, for the sake of simplicity, FIG. 6 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

It can be seen from the above embodiments that a terminal equipment receives configuration information from a network device, the configuration information is used for beam management based on an AI/ML functionality/model and performance monitoring of the AI/ML functionality/model, thereby being able to improve the performance and efficiency of beam management and enhance the accuracy and reliability of beam management.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit configuration information to a terminal equipment;
the terminal equipment configured to receive the configuration information, wherein the configuration information is used for beam management based on an AI/ML functionality/model, and performance monitoring of the AI/ML functionality/model.

The embodiments of the present application further provide a terminal equipment, but which is not limited in the present application, and can also be other devices.

FIG. 7 is a schematic diagram of a terminal equipment in the embodiment of the present application. As shown in FIG. 7, a terminal equipment 700 may include a processor 710 and a memory 720; the memory 720 stores data and program, and is coupled to the processor 710. It is worth noting that this figure is exemplary; other types of structures may also be used in addition to or instead of the structure to implement telecommunications functions or other functions.

For example, the processor 710 may be configured to execute the program to implement the performance monitoring configuration method as described in the embodiments of the first aspect. For example, the processor 710 may be configured to perform the following controls of: receiving configuration information from a network device, wherein the configuration information is used for beam management based on an AI/ML functionality/model, and performance monitoring of the AI/ML functionality/model.

As shown in FIG. 7, the terminal equipment 700 may further include a communication module 730, an input unit 740, a display 750, and a power supply 760. The functions of the above components are similar to the relevant art, and will not be repeated here. It is worth noting that the terminal equipment 700 is not necessarily required to include all of the components shown in FIG. 7, and the above components are not essential; in addition, the terminal equipment 700 may further include components not shown in FIG. 7, with reference to the relevant art.

The embodiments of the present application further provide a network device, which may be, for example, a base station, but which is not limited in the present application, and may also be other network devices.

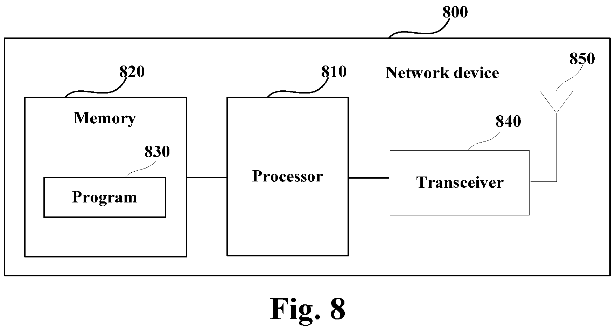

FIG. 8 is a schematic diagram of composition of the network device in the embodiments of the present application. As shown in FIG. 8, a network device 800 may include a processor 810 (such as a central processing unit (CPU)) and a memory 820; the memory 820 is coupled to the processor 810. The memory 820 may store various data and also may store a program 830 for information processing, and the program 830 is executed under the control of the processor 810.

For example, the processor 810 may be configured to execute the program to implement the performance monitoring configuration method as described in the embodiments of the second aspect. For example, the processor 810 may be configured to perform the following controls of: transmitting configuration information to a terminal equipment, wherein the configuration information is used for beam management based on an AI/ML functionality/model, and performance monitoring of the AI/ML functionality/model.

In addition, as shown in FIG. 8, the network device 800 may further include: a transceiver 840 and an antenna 850, etc., wherein the functionalities of the above components are similar to the relevant art, and will not be repeated here. It is worth noting that the network device 800 is not necessarily required to include all of the components shown in FIG. 8; in addition, the network device 800 may further include components not shown in FIG. 8, with reference to the relevant art.

The embodiments of the present application further provide a computer program which, when being executed in the terminal equipment, causes the terminal equipment to execute the performance monitoring configuration method described in the embodiments of the first aspect.

The embodiments of the present application further provide a storage medium storing a computer program which causes the terminal equipment to execute the performance monitoring configuration method described in the embodiments of the first aspect.

The embodiments of the present application further provide a computer program which, when being executed in the network device, causes the network device to execute the performance monitoring configuration method described in the embodiments of the second aspect.

The embodiments of the present application further provide a storage medium storing a computer program which causes the network device to execute the performance monitoring configuration method described in the embodiments of the second aspect.

The above apparatuses and methods of the present application can be implemented by hardware or by hardware combined with software. Th present disclosure relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A performance monitoring configuration method, including:
   receiving, by a terminal equipment, configuration information from a network device,
   wherein the configuration information is used for beam management based on an AI/ML functionality/model, and performance monitoring of the AI/ML functionality/model.
2. A performance monitoring configuration method, including:
   transmitting, by a network device, configuration information to a terminal equipment,
   wherein the configuration information is used for beam management based on an AI/ML functionality/model, and performance monitoring of the AI/ML functionality/model.
3. A terminal equipment including a memory storing a computer program and a processor configured to execute the computer program to implement the performance monitoring configuration method according to the supplement 1.
4. A network device including a memory storing a computer program and a processor configured to execute the computer program to implement the performance monitoring configuration method according to the supplement 2.

## Claims

1. A performance monitoring configuration apparatus, comprising:
a receiving unit configured to receive configuration information from a network device,
wherein the configuration information is used for beam management based on an AI/ML functionality/model, and performance monitoring of the AI/ML functionality/model.

2. The apparatus according to claim 1, wherein for network side performance monitoring, a second reference signal set for measurement is configured, and one or more reference signals for performance monitoring are configured,
wherein the reference signals for performance monitoring are the same or at least partially the same as reference signals in a first reference signal set for inference, or the reference signals for performance monitoring are a subset of the first reference signal set for inference.

3. The apparatus according to claim 1, wherein for network side performance monitoring, a report for measurement is configured, and a report for performance monitoring is configured.

4. The apparatus according to claim 1, wherein for network side performance monitoring, one or more reference signals for measurement and one or more reference signals for performance monitoring are configured together, and measurement results for the reference signals for measurement and measurement results for the reference signals for performance monitoring are reported together.

5. The apparatus according to claim 1, wherein for network side performance monitoring, the number of reference signals in a second reference signal set for measurement is M, measurement results for M reference signals are reported, or measurement results for N reference signals are reported, where N is less than or equal to M,
wherein the minimum number of the reference signals with measurement results being reported in the second reference signal set is predefined or configured, and/or, the maximum number of the reference signals with measurement results being reported in the second reference signal set is predefined or configured.

6. The apparatus according to claim 1, wherein for network side performance monitoring, the number of reference signals for performance monitoring is K, measurement results for K reference signals are reported, or measurement results for L reference signals are reported, where L is less than or equal to K,
wherein the minimum number of the reference signals for performance monitoring with measurement results being reported is predefined or configured, and/or, the maximum number of the reference signals for performance monitoring with measurement results being reported is predefined or configured.

7. The apparatus according to claim 1, wherein for network side performance monitoring, the strongest one or more beams are reported by a terminal equipment; the network device calculates a performance metric or beam prediction accuracy, according to the strongest one or more beams,
wherein a first report quantity is introduced, or a report quantity of L1-RSRP/L1-SINR is reused.

8. The apparatus according to claim 1, wherein for network side performance monitoring, hypothetical BLER is used for a performance metric, and a second report quantity is introduced; the hypothetical BLER is comprised in a report for performance monitoring.

9. The apparatus according to claim 1, wherein for network side performance monitoring, a terminal equipment reports L1-RSRP/L1-SINR of the strongest one or more or all beams for performance monitoring, wherein a report quantity of L1-RSRP/L1-SINR is reused;
the network device calculates a performance metric according to the L1-RSRP/L1-SINR of the strongest one or more or all beams, the performance metric comprises a difference between a L1-RSRP/L1-SINR for monitoring and a L1-RSRP/L1-SINR for prediction.

10. The apparatus according to claim 9, wherein a plurality of reports are configured, in which one report is for measurement results for reference signals for measurement, and another report is for measurement results for reference signals for performance monitoring;
or,
one report is configured, which is for measurement results for reference signals for measurement and for measurement results for reference signals for performance monitoring.

11. The apparatus according to claim 1, wherein for hybrid performance monitoring, one or more reference signals for performance monitoring are configured,
wherein the reference signals for performance monitoring are the same or at least partially the same as reference signals in a first reference signal set for inference, or the reference signals for performance monitoring are a subset of the first reference signal set for inference.

12. The apparatus according to claim 11, wherein a terminal equipment calculates a performance metric according to the strongest one or more beams and comprises the performance metric in a report for performance monitoring, wherein a first report quantity is introduced, or a report quantity of L1-RSRP/L1-SINR is reused;
or the strongest one or more beams are comprised in the report for performance monitoring by the terminal equipment; a network device calculates a performance metric according to the strongest one or more beams, wherein a first report quantity is introduced, or a report quantity of L1-RSRP/L1-SINR is reused.

13. The apparatus according to claim 11, wherein one or more top beams based on inference are comprised in a report for inference by a terminal equipment; a network device calculates beam prediction accuracy according to the one or more top beams.

14. The apparatus according to claim 11, wherein L1-RSRP/L1-SINR is used for a performance metric, a terminal equipment reports a L1-RSRP/L1-SINR for performance monitoring and a L1-RSRP/L1-SINR for inference, the network device calculates a difference between the L1-RSRP/L1-SINR for performance monitoring and the L1-RSRP/L1-SINR for inference.

15. The apparatus according to claim 11, wherein a L1-RSRP/L1-SINR difference is used for a performance metric, a terminal equipment calculates a difference between a L1-RSRP/L1-SINR for performance monitoring and a L1-RSRP/L1-SINR for inference, and reports the difference.

16. The apparatus according to claim 11, wherein hypothetical BLER is used for a performance metric, a terminal equipment reports hypothetical BLER for performance monitoring and/or hypothetical BLER for inference.

17. The apparatus according to claim 1, wherein DRX/DTX is enabled, for performance monitoring of AI/ML functionality/model, a timer or a counter is enlarged or scaled;
and/or,
DRX/DTX is enabled, the performance monitoring of AI/ML functionality/model is paused or stopped during a DRX/DTX period, or the performance monitoring of AI/ML functionality/model is maintained during a DRX/DTX period;
and/or,
DRX/DTX is enabled, a time window for temporal beam prediction falls within or overlaps with a DRX/DTX period, and prediction results for a part or all of time instances are skipped, or prediction results for a part or all of time instances are reported.

18. The apparatus according to claim 1, wherein AI/ML related configuration is changed or updated or switched, and performance monitoring of the AI/ML functionality/model is reset or restarted,
wherein the AI/ML related configuration change or update or switching comprises at least one of the following: AI/ML functionality/model change or update, AI/ML functionality/model switching, change in configuration of reference signals for performance monitoring, cell configuration change, scene configuration change, prediction time instance number change, or BWP switching.

19. A performance monitoring configuration apparatus, comprising:
a transmitting unit configured to transmit configuration information to a terminal equipment,
wherein the configuration information is used for beam management based on an AI/ML functionality/model, and performance monitoring of the AI/ML functionality/model.

20. A communication system, comprising:
a network device configured to transmit configuration information to a terminal equipment; and
the terminal equipment configured to receive the configuration information, wherein the configuration information is used for beam management based on an AI/ML functionality/model, and performance monitoring of the AI/ML functionality/model.
